(19) Europäisches Patentamt
European Patent Office
Office européen des brevets

(11) **EP 2 167 845 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(21) Anmeldenummer: **08760049.0**

(22) Anmeldetag: **27.05.2008**

(51) Int Cl.:
***F16H 61/02*** *(2006.01)*

(86) Internationale Anmeldenummer:
**PCT/EP2008/056451**

(87) Internationale Veröffentlichungsnummer:
**WO 2008/155193 (24.12.2008 Gazette 2008/52)**

(54) **VERFAHREN ZUR STEUERUNG EINES AUTOMATISIERTEN STUFENSCHALTGETRIEBES**

METHOD FOR CONTROLLING AN AUTOMATED MULTISTEP CHANGE-SPEED GEARBOX

PROCÉDÉ DE COMMANDE D'UNE TRANSMISSION AUTOMATIQUE À RAPPORTS ÉTAGÉS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.06.2007 DE 102007027771**

(43) Veröffentlichungstag der Anmeldung:
**31.03.2010 Patentblatt 2010/13**

(73) Patentinhaber: **ZF Friedrichshafen AG**
**88038 Friedrichshafen (DE)**

(72) Erfinder:
• **WOLFGANG, Werner**
**88213 Ravensburg (DE)**
• **WÜRTHNER, Maik**
**88048 Friedrichshafen (DE)**
• **SAUTER, Ingo**
**Aberdeen, North Carolina 28315 (US)**

(56) Entgegenhaltungen:
EP-A- 0 645 559      EP-A- 0 950 839
EP-A- 1 045 173      DE-A1- 10 134 997
DE-A1- 19 752 623      DE-A1-102005 013 697

**Beschreibung**

Die Erfindung betrifft ein Verfahren zur Steuerung eines automatisierten Stufenschaltgetriebes eines Kraftfahrzeugs, mit den Merkmalen des Oberbegriffs des Anspruchs 1 bzw. des Anspruchs 4.

Schon seit längerem sind Kraftfahrzeuge mit automatisierten Stufenschaltgetrieben, wie Wandler-Automatgetriebe, automatisierten Schaltgetriebe und automatisierten Doppelkupplungsgetriebe bekannt, bei denen die Schaltvorgänge wahlweise in einem Automatikmodus mit einer betriebsparameterabhängig programmgesteuerten Schaltungsauslösung und in einem Manuellmodus mit manueller Schaltungsauslösung durchgeführt werden können. Im Automatikmodus werden die Schaltungen in Abhängigkeit sensorisch erfasster Betriebsparameter, wie der Fahrgeschwindigkeit, der Fahrpedalstellung, der Motorlast und der Motordrehzahl mittels abgespeicherter Schaltkennlinien oder Schaltkennfelder automatisch ausgelöst, wogegen die Schaltungen im Manuellmodus durch die Betätigung entsprechender Schaltbetätigungselemente, wie eines in einer Schaltkonsole angeordneten Wählhebels (innerhalb einer Manuellschaltgasse) und von am Lenkrad angeordneten Schalttasten oder Schaltpaddeln durch den Fahrer selbst ausgelöst werden.

Im Automatikmodus sind die Schaltdrehzahl, der Gangsprung und der Schaltungsablauf der Schaltungen wesentlich von der Fahrstrategie des betreffenden Schaltprogramms, also einer übergeordneten, durch eine mit dem Schaltprogramm verfolgte Betriebseigenschaft des Kraftfahrzeugs bzw. des Antriebsstrangs, wie ein möglichst geringer Kraftstoffverbrauch, ein möglichst hoher Fahrkomfort oder eine möglichst hohe Fahrdynamik, bestimmt. Um dem Fahrer die Wahl zwischen mehreren Fahrstrategien zu ermöglichen, stehen häufig mindestens zwei auswählbare Schaltprogramme zur Verfügung. Diese sind z.B. ein Eco-Schaltprogramm mit relativ niedrigen Schaltdrehzahlen zur Erzielung eines geringen Kraftstoffverbrauchs und ein Sport-Schaltprogramm mit relativ hohen Schaltdrehzahlen zur Erzielung eines hohen Beschleunigungsvermögens, zwischen denen der Fahrer durch die Betätigung eines an der Schaltkonsole oder am Lenkrad angeordneten Wahlschalters wechseln kann. Es ist auch schon vorgeschlagen worden, dass die Auswahl und Aktivierung des jeweiligen Schaltprogramms mittels einer auf einer sensorischen Erfassung der Fahraktivität des Fahrers und/oder der Bewegungsdynamik des Kraftfahrzeugs basierenden Fahrertypbestimmung automatisch erfolgt.

Da jedoch die Wahlmöglichkeit zwischen zwei oder drei Schaltprogrammen für die meisten Fahrer keine befriedigende Anpassung des Schaltverhaltens an ihr persönliches Fahrverhalten ermöglicht, sind schon mehrere Vorschläge zur fahrerindividuellen Anpassung des Schaltverhaltens eines automatisierten Stufenschaltgetriebes gemacht worden.

So ist in der DE 694 03 419 T2 (EP 0 645 559 B1) eine Steuerungsvorrichtung eines automatischen Getriebes beschrieben, bei der im Manuellmodus ein Lernmodus aktivierbar ist, in dem jeweils zum Zeitpunkt der manuell ausgelösten Schaltungen Betriebsparameter erfasst und zur Bestimmung fahrerindividueller Schaltprogramme, also von entsprechenden fahrerindividuellen Schaltkennlinien bzw. Schaltkennfeldern, ausgewertet werden. Die Auswertung der Betriebsparameter erfolgt mittels eines neuronalen Netzwerkes und beinhaltet eine statistische Auswertung einer Streuung der manuell ausgelösten Schaltungen und eine Bewertung dieser Schaltungen hinsichtlich des Kraftstoffverbrauchs und der Durchzugskraft des Antriebsmotors. Der Lemmodus wird beendet, wenn die durch weitere manuell ausgelöste Schaltungen bedingten Änderungen der erlernten Schaltkennlinien innerhalb einer vorgegeben Toleranzgrenze bleiben.

Aus der DE 197 52 623 C2 ist eine Steuerung eines automatischen Kraftfahrzeuggetriebes bekannt, bei der das Schaltverhalten des Stufenschaltgetriebes durch das manuelle Auslösen von Schaltungen beeinflussbar ist, ohne dass dazu ein spezieller Lemmodus aktiviert werden muss. Die fahrerindividuelle Änderung von Schaltkennlinien erfolgt mittels Fuzzy-Produktionsregeln und basiert auf der überlagernden Interpolation zwischen jeweils mindestens zwei vorhandenen Grenzschaltkennlinien.

In einem weiteren, aus der DE 199 16 808 A1 bekannten Verfahren wird mindestens ein vordefiniertes Fahrprogramm, also entsprechende Schaltkennlinien bzw. Schaltkennfelder, eines Automatikmodus als gegeben vorausgesetzt. Das vorhandene Fahrprogramm wird durch eine Auswertung der im Manuellmodus bei manuell ausgelösten Schaltungen erfassten Betriebsparameter fahrerindividuell abgeändert. Die Erfassung der Betriebsparameter und die Abänderung des bestehenden Fahrprogramms erfolgt innerhalb eines aktivierbaren Lernmodus. Bei der Abänderung des bestehenden Fahrprogramms bleiben sicherheitsrelevante Programmteile unverändert erhalten.

Aus der EP 0 950 839 A2 ist ein System zum Steuern der Gangwechsel in einem Kraftfahrzeug bekannt, das mit einem Verbrennungsmotor und einer automatischen Kupplung ausgestattet ist und ein diskretes Schaltgetriebe mit einer servounterstützten Handschaltung besitzt. Über einen Lernprozess wird die Fahrweise oder der Fahrstil des Fahrers während einer Testfahrt mit händischem Gangwechsel abgespeichert. Hierbei werden Abbildungen von modifizierten Kurven erzeugt und gespeichert, die die Bedingungen für die Gangwechsel in Übereinstimmung mit einem persönlichen Fahrstil festlegen. Ein automatischer Gangwechsel kann dann aufgrund der modifizierten Kurven, die im Lernprozess erzeugt wurden, ausgeführt werden.

Die DE 10 2005 013 697 A1 offenbart ein Verfahren zur Kennfeldermittlung zur Steuerung eines Schaltprozesses für vollautomatische oder automatisierte Getriebe eines Kraftfahrzeuges, bei dem über eine separate Steuereinrichtung ein Fahrantriebsstrang mit einem vorgegebenen Fahrprofil betrieben wird und die dabei ermittelten Motor und Getriebekennwerte sowie die dazugehörigen Betriebsparameter in der Steuereinrichtung gespeichert werden. Über Sensoren wird die aktuelle Fahrzeugbeschleunigung aufgenommen und der Steuereinrichtung zur zeitsynchronen Speicherung mit dem jeweilig dazugehörigen Betriebsparameter zugeführt. Anhand des ermittelten Verlaufs der Fahrzeugbeschleunigung wird während eines Schaltvorganges in der Steuereinrichtung ein objektiver Kennwert zur Bewertung des jeweiligen Schaltvorganges ermittelt.

Ein ähnliches Verfahren ist in der DE 101 34 997 A1, welche zudem alle Merkmale des Oberbegriffs des Anspruchs 1 bzw. des Anspruchs 4 offenbart, beschrieben. Dieses bekannte Verfahren geht von einer elektronischen Steuerungseinrichtung mit einem Programmspeicher aus, auf dem ein Steuerprogramm zur Steuerung eines Getriebes und gegebenenfalls einer Kupplung, also ein Schaltprogramm für den Automatikmodus, in Abhängigkeit von sensorisch erfassten Betriebsparametern abgelegt ist. Der Programmspeicher enthält zudem ein Programm, mittels dem das vorhandene Steuerprogramm aufgrund erfasster Eingaben des Fahrers, wie manuell ausgelöster Schaltungen, an das vom Fahrer gewünschte Betriebsverhalten angepasst werden kann. Das fahrerindividuelle Steuerprogramm kann auf einem externen Datenträger, wie einer auch als Fahrzeugschlüssel verwendbaren Speicherkarte, abgelegt werden.

Allen vorbeschriebenen Steuerungsvorrichtungen und Verfahren ist gemeinsam, dass die Ermittlung fahrerindividueller Schaltprogramme, also von speziellen, dem jeweiligen Fahrerwunsch entsprechenden Schaltkennlinien oder Schaltkennfeldern, auf den bekannten Betriebseigenschaften des jeweiligen Kraftfahrzeugs bzw. Antriebsstrangs beruht und in der Abänderung mindestens eines vorhandenen Schaltprogramms, nämlich der Anpassung entsprechender im Rahmen der Fahrzeugentwicklung festgelegter Schaltkennlinien oder Schaltkennfelder, besteht. Ohne die Kenntnis der wesentlichen Betriebseigenschaften des Antriebsstrangs und das Vorhandensein mindestens eines als Ausgangsdatensatz dienenden Basis-Schaltprogramms ist die Ermittlung eines fahrerindividuellen Schaltprogramms nach den bekannten Verfahren nicht möglich.

Die für die Steuerung eines Stufenschaltgetriebes relevanten Betriebseigenschaften eines Kraftfahrzeugs, insbesondere des Antriebsstrangs, und die Schaltkennlinien sowie Schaltkennfelder mindestens eines auch als Ausgangsdatensatz für spätere fahrerindividuelle Schaltprogramme verwendbaren Schaltprogramms werden im Rahmen der Entwicklung eines neuen Kraftfahrzeugs oder der Applikation eines Stufenschaltgetriebes in ein anderes Kraftfahrzeug von hochqualifiziertem Fachpersonal, wie Entwicklungs-, Versuchs- , und Applikationsingenieuren des betreffenden Fahrzeug- oder Getriebeherstellers ermittelt und in einem Datenspeicher des Getriebesteuergerätes abgelegt. Aufgrund der Vielfalt der Funktionen sind hierbei alleine für die Grundfunktionen des Stufenschaltgetriebes, wie die Auswertung von Getriebe- und Kupplungssensoren, die Ansteuerung der Gang- und Kupplungssteller und die Steuerung des zeitlichen Ablaufs der Schaltungen, mehrere tausend Parameter und Kennlinien sowie für jede Fahrstrategie jeweils etwa weitere tausend Parameter und Kennlinien erforderlich, von denen viele bei einer neuen Anwendung geändert bzw. an die neue Applikation angepasst werden müssen. Bislang erfolgt dies im Rahmen aufwendiger und zeitraubender Versuchsfahrten durch entsprechendes Fachpersonal, indem Parameter und Kennlinienwerte z.B. über einen an das Getriebesteuergerät und gegebenenfalls an das Motorsteuergerät angeschlossenen Laptop manuell eingegeben oder geändert werden.

Da diese Vorgehensweise relativ aufwendig und zeitraubend ist sowie entsprechend geschultes Fachpersonal erfordert, ist es die Aufgabe der vorliegenden Erfindung, ein Verfahren zur Steuerung eines automatisierten Stufenschaltgetriebes anzugeben, mit dem das Fachpersonal bei der Ermittlung von Parametern und Kennlinien für die Erstellung oder Abänderung eines Schaltprogramms wesentlich unterstützt werden kann.

Diese Aufgabe wird durch die Merkmale des Anspruchs 1 bzw. des Anspruchs 4 gelöst.

Gemäß den Merkmalen der Ansprüche 1 bzw. 4 betrifft die Erfindung daher ein Verfahren zur Steuerung eines automatisierten Stufenschaltgetriebes eines Kraftfahrzeugs, mit einem elektronischen Steuergerät, das mit Sensoren zur Erfassung von Betriebsparametern sowie mit Gang- und/oder Kupplungsstellern zur Durchführung von Schaltungen in Verbindung steht und einen Datenspeicher zur Abspeicherung von Steuerdaten aufweist, wobei das Stufenschaltgetriebe in einem Automatikmodus mit automatisch auslösbaren Schaltungen, in einem Manuellmodus mit von einem Fahrer manuell auslösbaren Schaltungen und in einem Lernmodus mit manuell auslösbaren Schaltungen und automatisch erfassbaren Betriebsparametern betreibbar ist.

Zudem ist ein bedarfsweise aktivierbarer Konfigurations-Lernmodus vorgesehen, in dem während einer Testfahrt mit manueller Schaltungsauslösung Betriebsparameter ereignisabhängig automatisch erfasst, zu Steuerdaten des Stufenschaltgetriebes verarbeitet, und die Steuerdaten für die zukünftige Steuerung des Stufenschaltgetriebes in dem Datenspeicher abgespeichert werden.

Vorteilhafte und zweckmäßige Ausgestaltungen und Weiterbildungen des erfindungsgemäßen Verfahrens sind Gegenstand der Unteransprüche.

Der Erfindung liegt die Erkenntnis zu Grunde, dass viele Betriebsparameter, die unmittelbar oder mittelbar zur Bestimmung von Steuerdaten für die Steuerung eines Stufenschaltgetriebes dienen, während einer Testfahrt, in der die relevanten Betriebspunkte gezielt oder eher zufällig angefahren werden, vorteilhaft automatisch erfasst und ausgewertet werden sollen. Hierdurch wird die Konfigurationsarbeit des betreffenden Fachpersonals wesentlich erleichtert und beschleunigt, so dass diese Tätigkeit auch von weniger erfahrenen Versuchs- oder Applikationsingenieuren durchgeführt werden kann. Für die Durchführung des Verfahrens müssen im Allgemeinen keine Steuerdaten, die als abzuändernde Basisdaten verwendbar sind, vorhanden sein.

Da aus Sicherheitsgründen eine Nutzung des Konfigurations-Lernmodus nur im Rahmen der Fahrzeugentwicklung durch Fachpersonal, nicht aber im späteren Fahrbetrieb durch den jeweiligen Fahrer möglich sein soll, erfolgt die Aktivierung des Konfigurations-Lernmodus zur Nutzungsbeschränkung auf Fachpersonal zweckmäßig über eine Zugangskontrolleinrichtung. Die Zugangskontrolleinrichtung kann, z.B. in Form eines an eine Diagnosesteckerbuchse anschließbaren und eine Steckbrücke enthaltenden Kodiersteckers, hardwarebasiert oder, beispielsweise in Form eines auf dem Datenspeicher befindlichen, umkodierbaren Datenbits einer Steuervariablen, software-basiert sein. Möglich ist auch eine Freischaltung des Konfigurations-Lernmodus durch die Eingabe eines geheimen Zifferncodes über die Tastatur eines vorhandenen Bordcomputers.

In einer ersten bevorzugten Anwendung des Konfigurations-Lernmodus ist vorgesehen, dass während einer Testfahrt für eine vorab festgelegte Anzahl von Betriebspunkten, die jeweils durch eine Kombination aus einer bestimmten Motordrehzahl n_mot und einem bestimmten, aus der Einspritzmenge des Antriebsmotors abgeleiteten induzierten Motormoment m_ind definiert sind, jeweils Betriebsparameter zur Bestimmung der aktuell an den Antriebsrädern wirksamen Zugkraft f_zug erfasst werden, und dass aus der ermittelten Zugkraft f_zug jeweils ein Momentenwirkungsgrad eta des Antriebsmotors berechnet und in einem entsprechenden Datenfeld des Datenspeichers abgelegt wird.

Diese Funktion ist besonders für Nutzfahrzeuge relevant, wenn ein vorhandenes automatisiertes Stufenschaltgetriebe in Kombination mit einem neuen Antriebsmotor eingesetzt werden soll. Die hierbei ermittelten Werte des Momentenwirkungsgrades eta geben jeweils das Verhältnis des tatsächlich an den Antriebsrädern anliegenden und auf die Kurbelwelle des Antriebsmotors reduzierten Antriebsmomentes m_mot in Relation zu dem aus der Einspritzmenge abgeleiteten induzierten Motormoment m_ind an und werden z.B. für die verbrauchsabhängige Bestimmung von Schaltkennlinien und Schaltkennfeldern sowie für die spätere Ermittlung der Fahrzeugmasse m_fzg während des Fahrbetriebs benötigt.

Die Berechnung der wirksamen Zugkraft f_zug erfolgt bevorzugt nach einer Ermittlung und Eingabe der Fahrzeugmasse m_fzg und des Rollwiderstands f_roll während einer Testfahrt mit geringer Fahrgeschwindigkeit in der Ebene jeweils mittels einer vereinfachten Fahrwiderstandsgleichung. Die Fahrwiderstandsgleichung

$$f\_zug = f\_steig + f\_roll + f\_träg + f\_teta + f\_luft,$$

mit der Zugkraft am Rad f_zug, der Hangabtriebskraft f_steig, dem Rollwiderstand f_roll, der Massenträgheitskraft der Fahrzeugmasse f_träg, der Massenträgheitskraft der rotierenden Massen f_teta und dem Luftwiderstand f_luft vereinfacht sich bei einer Fahrt in der Ebene (f_steig = 0) und mit geringer Fahrgeschwindigkeit (f_luft = 0) zu

$$f\_zug = f\_roll + f\_träg + f\_teta.$$

Mittels der Gleichung f_zug = m_mot * i_gg * i_ha / r_dyn, wobei m_mot das Motormoment, i_gg die Getriebeübersetzung, i_ha die Übersetzung der Hinterachse bzw. Antriebsachse und r_dyn der dynamische Reifenradius der Antriebsräder ist, sowie mit f_teta = m_teta * i_gg * i_ha / r_dyn, wobei mit m_teta das Massenträgheitsmoment der rotierenden Massen, also des Antriebsmotors, des Getriebes, der Antriebswellen und der Antriebsräder bezeichnet ist, und mit f_träg = m_fzg * a_fzg (wobei mit m_fzg die Fahrzeugmasse m_fzg und mit a_fzg die Fahrzeugbeschleunigung bezeichnet sind), sowie mit m_teta = dn_mot * (J_mot + J_getr), wobei mit dn_mot der Drehzahlgradient des Antriebsmotors, mit J_mot das Trägheitsmoment des Antriebsmotors und mit J_getr das Trägheitsmoment des Getriebes bezeichnet sind, ergibt sich durch Einsetzen und Umstellen für das Motormoment m_mot die Gleichung

$$m\_mot = (f\_roll + m\_fzg * a\_fzg) / (i\_gg * i\_ha / r\_dyn)$$
$$+ dn\_mot * (J\_mot + J\_getr).$$

Aus dem derart berechneten Motormoment m_mot ergibt sich der jeweilige Momentenwirkungsgrad eta gemäß der Gleichung

$$eta = m\_mot / m\_ind,$$

wobei mit m_ind das über die Einspritzmenge in der Motorsteuerung bestimmte induzierte Motormoment bezeichnet ist.

Da der Zusammenhang zwischen dem aus der Einspritzmenge abgeleiteten induzierten Motormoment m_ind und des über die Zugkraft an den Antriebsrädern f_zug zurückgerechnete Motormoment m_mot sich erfahrungsgemäß mit der Betriebstemperatur t_mot des Antriebsmotors ändert, erfolgt die Erfassung der Betriebsparameter bevorzugt bei verschiedenen Betriebstemperaturen t_mot des Antriebsmotors, und die ermittelten Momentenwirkungsgrade eta werden jeweils in einem temperaturspezifischen Datenfeld abgelegt. Im späteren Fahrbetrieb wird dann jeweils auf die Daten des zur aktuellen Betriebstemperatur t_mot des Antriebsmotors passenden Datenfeldes zugegriffen.

Der Anwender eines zu einem Computer-Programm umgesetzten und in einem Computer installierten Verfahrens gemäß der Erfindung, also der betreffende Entwicklungsingenieur, muss bei einer Nutzung dieser Anwendung nach der Aktivierung des Konfigurations-Lernmodus nur die beispielsweise auf einer Waage ermittelte Fahrzeugmasse m_fzg und den für die Gewichtsklasse des Kraftfahrzeugs bekannten Rollwiderstand f_roll in den Computer eingeben und anschließend in einer langsamen Fahrt in der Ebene mehr oder weniger gezielt die Betriebspunkte anfahren, in denen die jeweiligen Betriebsparameter automatisch erfasst und daraus der jeweilige Momentenwirkungsgrad eta bestimmt sowie in dem betreffenden Datenfeld abgespeichert wird.

In einer zweiten bevorzugten Anwendung des Konfigurations-Lernmodus ist vorgesehen, dass während einer Testfahrt für eine vorab festgelegte Anzahl von Betriebspunkten, die jeweils durch eine Kombination aus einem bestimmten Istgang, einer bestimmten Fahrpedalstellung, einer bestimmten Fahrzeugmasse und einem bestimmten Fahrwiderstand definiert sind, jeweils bei einer manuell ausgelösten Schaltung die betreffenden Betriebsparameter erfasst werden, und dass der jeweilige Gangsprung in einem entsprechenden Datenfeld des Datenspeichers abgelegt wird.

Auch diese Funktion ist vorwiegend für Nutzfahrzeuge von Bedeutung und dann anwendbar, wenn ein bereits vorhandenes automatisiertes Stufenschaltgetriebe in einem neuen Kraftfahrzeugtyp zur Anwendung kommen soll, und der Fahrzeughersteller dem Getriebehersteller im Rahmen einer bevorzugten Fahrstrategie bestimmte Gangfolgen bzw. Gangsprünge vorgibt. In diesem Fall müssen nach der Aktivierung des Konfigurations-Lernmodus die entsprechenden Gangsprünge nur durch die manuelle Ausführung der entsprechenden Schaltungen vorgegeben werden. Diese Gangsprungvorgaben werden dann zusammen mit den gleichzeitig automatisch erfassten Parametern Istgang, Fahrpedalstellung, Fahrzeugmasse und Fahrwiderstand automatisch in den entsprechenden Kennfeldern des Datenfeldes abgespeichert und stehen somit für den zukünftigen Fahrbetrieb als Steuerdaten zur Verfügung.

Da es einem Fahrer während einer Fahrt in dem Konfigurations-Lernmodus möglicherweise nicht immer gelingt, alle vorgegebenen Betriebspunkte anzufahren, ist bevorzugt vorgesehen, dass die Werte der innerhalb der Testfahrt nicht angefahrenen Betriebspunkte durch eine Interpolation, eine Extrapolation oder eine andere Korrelation mit vorhandenen Werten bestimmt, und die resultierenden Werte in dem betreffenden Datenfeld des Datenspeichers abgelegt werden.

Zur Steigerung der Genauigkeit der erfassten Betriebsparameter und der daraus abgeleiteten Steuerdaten ist es vorteilhaft, wenn die Werte von innerhalb der Testfahrt mehrfach angefahrener Betriebspunkte gemittelt oder anderweitig statistisch ausgewertet sowie die resultierenden eta-Werte in dem betreffenden Datenfeld des Datenspeichers abgelegt werden.

Ebenfalls ist bevorzugt vorgesehen, dass ein akustisches und/oder optisches Signal ausgegeben wird, wenn innerhalb der Testfahrt alle vorgegebenen Betriebspunkte angefahren und die betreffenden Werte ermittelt worden sind, oder wenn die Werte der nicht angefahrenen Betriebspunkte durch eine Interpolation, eine Extrapolation oder eine andere Korrelation aus vorhandenen Werten ableitbar sind. Dem betreffenden Entwicklungsingenieur wird somit angezeigt, ob er die Testfahrt beenden kann oder für die Ermittlung weiterer Werte noch nicht angefahrener Betriebspunkte fortsetzen muss.

Zur Verdeutlichung der Erfindung ist der Beschreibung eine Zeichnung beigefügt. In dieser zeigt die einzige Figur eine Tabelle eines Datenfeldes mit für mehrere Betriebspunkte ermittelten Momentenwirkungsgrad-Werten.

In der beigefügten Tabelle ist für mehrere Betriebspunkte, die jeweils durch ein Wertepaar aus einer bestimmten Motordrehzahl n_mot des Antriebsmotors eines Kraftfahrzeugs und einem bestimmten, aus der Einspritzmenge des Antriebsmotors abgeleiteten und hier in % des Maximalwertes angegebenen induzierten Motormoment m_ind definiert sind, ein Momentenwirkungsgrad eta angegeben.

Diese Momentenwirkungsgrad-Werte eta sind erfindungsgemäß bei einem aktivierten Konfigurations-Lernmodus ermittelt worden, indem während einer bevorzugt mit geringer Fahrgeschwindigkeit in der Ebene durchgeführten Testfahrt in den betreffenden Betriebspunkten automatisch jeweils Betriebsparameter zur Bestimmung der aktuell an den Antriebsrädern wirksamen Zugkraft f_zug erfasst, die Zugkraft f_zug mittels einer vereinfachten Fahrwiderstandsgleichung aus den Betriebsparametern berechnet, und der betreffende Momentenwirkungsgrad eta des Antriebsmotors aus der Zugkraft f_zug und der zwischen dem Antriebsmotor und den Antriebsrädern wirksamen Übersetzung berechnet

**EP 2 167 845 B1**

sowie in dem durch die Tabelle dargestellten Datenfeld eines Datenspeichers abgespeichert wurde.

Wird im normalen Fahrbetrieb, z.B. zur Bestimmung der Fahrzeugmasse m_fzg über den aktuellen Fahrwiderstand, ein genauer Wert des aktuellen Motormomentes m_mot benötigt, so wird dieser durch die Multiplikation des von der Motorsteuerung gelieferten, aus der Einspritzmenge des Antriebsmotors abgeleiteten induzierten Motormomentes m_ind mit dem jeweils passenden Momentenwirkungsgrad eta bestimmt. Der jeweilige Momentenwirkungsgrad eta erfasst neben einer allgemeinen Unsicherheit in der Bestimmung des induzierten Motormomentes m_ind auch den Wirkungsgrad des gesamten Antriebsstrangs zwischen dem Antriebsmotor und den Antriebsrädern.

Bezugszeichen

| | |
|---|---|
| a_fzg | Fahrzeugbeschleunigung |
| dn_mot | Drehzahlgradient des Antriebsmotors |
| eta | Momentenwirkungsgrad |
| f_luft | Luftwiderstand |
| f_roll | Rollwiderstand |
| f_steig | Hangabtriebskraft |
| f_teta | Massenträgheitskraft der rotierenden Massen |
| f_träg | Massenträgheitskraft der Fahrzeugmasse |
| f_zug | Zugkraft (an den Antriebsrädern) |
| i_gg | Getriebeübersetzung |
| i_ha | Übersetzung der Hinterachse (Antriebsachse) |
| J_getr | Trägheitsmoment des Getriebes |
| J_mot | Trägheitsmoment des Antriebsmotors |
| m_fzg | Fahrzeugmasse |
| m_ind | induziertes Motormoment |
| m_mot | Motormoment |
| m_teta | Massenträgheitsmoment der rotierenden Massen |
| n_mot | Motordrehzahl |
| r_dyn | dynamischer Reifenradius |
| t_mot | Betriebstemperatur des Antriebsmotors |

**Patentansprüche**

1. Verfahren zur Steuerung eines automatisierten Stufenschaltgetriebes eines Kraftfahrzeugs, mit einem elektronischen Steuergerät, das mit Sensoren zur Erfassung von Betriebsparametern sowie mit Gang- und/oder Kupplungsstellern zur Durchführung von Schaltungen in Verbindung steht und einen Datenspeicher zur Abspeicherung von Steuerdaten aufweist, wobei das Stufenschaltgetriebe in einem Automatikmodus mit automatisch auslösbaren Schaltungen, in einem Manuellmodus mit von einem Fahrer manuell auslösbaren Schaltungen und in einem Lemmodus mit manuell auslösbaren Schaltungen und automatisch erfassbaren Betriebsparametern betreibbar ist, wobei ein bedarfsweise aktivierbarer Konfigurations-Lernmodus vorgesehen ist, in dem während einer Testfahrt mit manueller Schaltungsauslösung Betriebsparameter ereignisabhängig automatisch erfasst, zu Steuerdaten des Stufenschaltgetriebes verarbeitet, und die Steuerdaten für die zukünftige Steuerung des Stufenschaltgetriebes in dem Datenspeicher abgespeichert werden, **dadurch gekennzeichnet, dass** während einer Testfahrt für eine vorab festgelegte Anzahl von Betriebspunkten, die jeweils durch eine Kombination aus einer bestimmten Motordrehzahl (n_mot) und einem bestimmten, aus der Einspritzmenge des Antriebsmotors abgeleiteten induzierten Motormoment (m_ind) definiert sind, jeweils Betriebsparameter zur Bestimmung der aktuell an den Antriebsrädern wirksamen Zugkraft (f_zug) erfasst werden, und dass aus der ermittelten Zugkraft (f_zug) jeweils ein Momentenwirkungsgrad (eta) des Antriebsmotors berechnet und in einem entsprechenden Datenfeld des Datenspeichers abgelegt wird.

2. Verfahren nach Anspruch 1, **dadurch gekennzeichnet, dass** die Berechnung der wirksamen Zugkraft (f_zug) nach einer Ermittlung und Eingabe der Fahrzeugmasse (m_fzg) und des Rollwiderstands (f_roll) während einer Testfahrt mit geringer Fahrgeschwindigkeit in der Ebene jeweils mittels einer vereinfachten Fahrwiderstandsgleichung erfolgt, wobei bei der vereinfachten Fahrwiderstandsgleichung eine Hangabtriebskraft (f_steig) und ein Luftwiderstand (f_luft) vernachlässigbar sind.

3. Verfahren nach Anspruch 1 oder 2, **dadurch gekennzeichnet, dass** die Erfassung der Betriebsparameter bei verschiedenen Betriebstemperaturen (t_mot) des Antriebsmotors erfolgt, und dass die ermittelten Momentenwirkungsgrade (eta) jeweils in einem temperaturspezifischen Datenfeld abgelegt werden.

4. Verfahren zur Steuerung eines automatisierten Stufenschaltgetriebes eines Kraftfahrzeugs, mit einem elektronischen Steuergerät, das mit Sensoren zur Erfassung von Betriebsparametern sowie mit Gang- und/oder Kupplungsstellern zur Durchführung von Schaltungen in Verbindung steht und einen Datenspeicher zur Abspeicherung von Steuerdaten aufweist, wobei das Stufenschaltgetriebe in einem Automatikmodus mit automatisch auslösbaren Schaltungen, in einem Manuellmodus mit von einem Fahrer manuell auslösbaren Schaltungen und in einem Lernmodus mit manuell auslösbaren Schaltungen und automatisch erfassbaren Betriebsparametern betreibbar ist, wobei ein bedarfsweise aktivierbarer Konfigurations-Lernmodus vorgesehen ist, in dem während einer Testfahrt mit manueller Schaltungsauslösung Betriebsparameter ereignisabhängig automatisch erfasst, zu Steuerdaten des Stufenschaltgetriebes verarbeitet, und die Steuerdaten für die zukünftige Steuerung des Stufenschaltgetriebes in dem Datenspeicher abgespeichert werden, **dadurch gekennzeichnet, dass** während einer Testfahrt für eine vorab festgelegte Anzahl von Betriebspunkten, die jeweils durch eine Kombination aus einem bestimmten Istgang, einer bestimmten Fahrpedalstellung, einer bestimmten Fahrzeugmasse (m_fzg) und einem bestimmten Fahrwiderstand definiert sind, jeweils bei einer manuell ausgelösten Schaltung die betreffenden Betriebsparameter erfasst werden, und dass der jeweilige Gangsprung in einem entsprechenden Datenfeld des Datenspeichers abgelegt wird.

5. Verfahren nach einem der Ansprüche 1 bis 4, **dadurch gekennzeichnet, dass** die Werte der Momentenwirkungsgrade (eta) der inner halb der Testfahrt nicht angefahrenen Betriebspunkte durch eine Interpolation, eine Extrapolation oder eine andere Korrelation mit vorhandenen Momentenwirkungsgrad-Werten (eta) bestimmt, und die resultierenden Werte (eta) in dem betreffenden Datenfeld des Datenspeichers abgelegt werden.

6. Verfahren nach zumindest einem der Ansprüche 1 bis 5, **dadurch gekennzeichnet, dass** die Werte der Momentenwirkungsgrade (eta) von innerhalb der Testfahrt mehrfach angefahrener Betriebspunkten gemittelt oder anderweitig statistisch ausgewertet und die resultierenden Momentenwirkungsgrad-Werte (eta) in dem betreffenden Datenfeld des Datenspeichers abgelegt werden.

7. Verfahren nach zumindest einem der Ansprüche 1 bis 6, **dadurch gekennzeichnet, dass** ein akustisches und/oder optisches Signal ausgegeben wird, wenn innerhalb der Testfahrt alle vorgegebenen Betriebspunkte angefahren und die betreffenden Werte (eta) ermittelt sind, oder wenn die Momentenwirkungsgrad-Werte (eta) der nicht angefahrenen Betriebspunkte durch eine Interpolation, eine Extrapolation oder eine andere Korrelation aus vorhandenen Werten (eta) ableitbar sind.

8. Verfahren nach Anspruch 1, **dadurch gekennzeichnet, dass** die Aktivierung des Konfigurations-Lernmodus zur Nutzungsbeschränkung auf Fachpersonal über eine Zugangskontrolleinrichtung erfolgt.

**Claims**

1. Method for controlling an automated multi-stage shift transmission of a motor vehicle, having an electronic control unit which is connected to sensors for measuring operating parameters and to gear and/or clutch actuators for carrying out shifts, and having a data memory for storing control data, with the multi-stage shift transmission being operable in an automatic mode with automatically triggerable shifts, in a manual mode with shifts triggerable manually by a driver, and in a learning mode with manually triggerable shifts and automatically measurable operating parameters, with a configuration learning mode being provided which can be activated on demand and in which, during a test drive with manual shift triggering, operating parameters are automatically measured in an event-dependent manner and are processed to form control data of the multi-stage shift transmission, and the control data are stored in the data memory for the future control of the multi-stage shift transmission, **characterized in that**, during a test drive, for a predefined number of operating points which are defined in each case by a combination of a certain engine speed (n_mot) and a certain induced engine torque (m_ind) derived from the injection quantity of the drive engine, in each case operating parameters for determining the tractive force (f_zug) presently acting on the drive wheels are measured, and **in that** in each case a torque efficiency (eta) of the drive engine is calculated from the determined tractive force (f_zug) and stored in a corresponding data map of the data memory.

2. Method according to Claim 1, **characterized in that** the calculation of the acting tractive force (f_zug) takes place, after a determination and input of the vehicle mass (m_fzg) and of the rolling resistance (f_roll) during a test drive at low driving speed on a flat surface, in each case by means of a simplified driving resistance equation, with a downhill-slope force (f_steig) and an air resistance (f_luft) being negligible in the simplified driving resistance equation.

3. Method according to Claim 1 or 2, **characterized in that** the measurement of the operating parameters takes place at different operating temperatures (t_mot) of the drive engine, and **in that** the determined torque efficiencies (eta) are stored in each case in a temperature-specific data map.

4. Method for controlling an automated multi-stage shift transmission of a motor vehicle, having an electronic control unit which is connected to sensors for measuring operating parameters and to gear and/or clutch actuators for carrying out shifts, and having a data memory for storing control data, with the multi-stage shift transmission being operable in an automatic mode with automatically triggerable shifts, in a manual mode with shifts triggerable manually by a driver, and in a learning mode with manually triggerable shifts and automatically measurable operating parameters, with a configuration learning mode being provided which can be activated on demand and in which, during a test drive with manual shift triggering, operating parameters are automatically measured in an event-dependent manner and are processed to form control data of the multi-stage shift transmission, and the control data are stored in the data memory for the future control of the multi-stage shift transmission, **characterized in that**, during a test drive, for a predefined number of operating points which are defined in each case by a combination of a certain present gear, a certain accelerator pedal position, a certain vehicle mass (m_fzg) and a certain driving resistance, the relevant operating parameters are measured in each case during a manually triggered shift, and **in that** the respective gear step is stored in a corresponding data map of the data memory.

5. Method according to one of Claims 1 to 4, **characterized in that** the values of the torque efficiencies (eta) of the operating points not encountered within the test drive are determined by interpolation, extrapolation or some other correlation with available torque efficiency values (eta), and the resulting values (eta) are stored in the relevant data map of the data memory.

6. Method according to at least one of Claims 1 to 5, **characterized in that** the values of the torque efficiencies (eta) of operating points encountered multiple times within the test drive are averaged or statistically evaluated in some other way, and the resulting torque efficiency values (eta) are stored in the relevant data map of the data memory.

7. Method according to at least one of Claims 1 to 6, **characterized in that** an audible and/or visual signal is output when, within the test drive, all the predefined operating points have been encountered and the relevant values (eta) have been determined, or when the torque efficiency values (eta) of the operating points not encountered can be derived from available values (eta) by interpolation, extrapolation or some other correlation.

8. Method according to Claim 1, **characterized in that** the configuration learning mode is activated via an access control device in order to restrict use to specialist personnel.

**Revendications**

1. Procédé de commande de la transmission automatique à plusieurs rapports d'un véhicule automobile à l'aide d'un appareil de commande électronique relié à des détecteurs qui détectent des paramètres de fonctionnement ainsi qu'à l'aide de dispositifs de sélection de rapport et/ou d'embrayage qui exécutent les changements de rapport et à l'aide d'une mémoire de données qui conserve des données de commande,
la transmission à plusieurs rapports pouvant fonctionner en un mode automatique dans lequel les changements de rapport sont engagés automatiquement, en un mode manuel dans lequel les changements de rapport sont engagés manuellement par le conducteur et en mode d'apprentissage dans lequel les changements de rapport sont engagés manuellement et des paramètres de fonctionnement sont détectés automatiquement,
avec un mode d'apprentissage de configuration activable en cas de besoin et dans lequel, pendant un déplacement de test pendant lequel les changements de rapport sont engagés manuellement, les paramètres de fonctionnement sont détectés automatiquement en fonction des événements, sont transformés en données de commande de la transmission à plusieurs rapports, les données de commande étant conservées dans la mémoire de données en vue de la commande future de la transmission à plusieurs rapports,
**caractérisé en ce que**
pendant un déplacement de test, pour un nombre préalablement défini de points de fonctionnement qui sont tous définis par une combinaison d'un régime moteur (n_mot) défini et d'un couple moteur (m_ind) résultant déduit du débit d'injection du moteur d'entraînement, des paramètres de fonctionnement qui déterminent la force de traction (f_zug) qui agit à tout instant sur les roues d'entraînement sont détectés et

**en ce qu'**à partir de la force de traction (f_zug) déterminée, un rendement de couple (eta) du moteur d'entraînement est calculé et est conservé dans un champ de données approprié de la mémoire de données.

2. Procédé selon la revendication 1, **caractérisé en ce que** le calcul de la force de traction effective (f_zug) s'effectue après détermination et introduction de la masse (m_fzg) du véhicule et de la résistance au roulage (f_roll) pendant un déplacement de test à petite vitesse de déplacement dans un plan, chaque fois au moyen d'une équation simplifiée de résistance au déplacement, l'équation simplifiée de résistance au déplacement négligeant la force de dissipation de la suspension (f_steig) et la résistance de l'air (f_luft).

3. Procédé selon les revendications 1 ou 2, **caractérisé en ce que** la détection des paramètres de fonctionnement s'effectue à différentes températures de fonctionnement (t_mot) du moteur d'entraînement et **en ce que** les rendements de couple (eta) déterminés sont tous conservés dans un champ de données spécifique à chaque température.

4. Procédé de commande d'une transmission automatique à plusieurs rapports d'un véhicule automobile, à l'aide d'un appareil de commande électronique relié à des détecteurs qui détectent des paramètres de fonctionnement ainsi qu'à l'aide de dispositifs de sélection de rapport et/ou d'embrayage qui exécutent les changements de rapport et à l'aide d'une mémoire de données qui conserve des données de commande,

la transmission à plusieurs rapports pouvant fonctionner en un mode automatique dans lequel les changements de rapport sont engagés automatiquement, en un mode manuel dans lequel les changements de rapport sont engagés manuellement par le conducteur et en mode d'apprentissage dans lequel les changements de rapport sont engagés manuellement et des paramètres de fonctionnement sont détectés automatiquement,

avec un mode d'apprentissage de configuration activable en cas de besoin et dans lequel, pendant un déplacement de test pendant lequel les changements de rapport sont engagés manuellement, les paramètres de fonctionnement sont détectés automatiquement en fonction des événements, sont transformés en données de commande de la transmission à plusieurs rapports, les données de commande étant conservées dans la mémoire de données en vue de la commande future de la transmission à plusieurs rapports,

**caractérisé en ce que**

pendant un déplacement de test et pour un nombre défini au préalable de points de fonctionnement qui sont tous définis par une combinaison d'un rapport défini de transmission effectif, d'une position définie de la pédale d'accélération, d'une masse définie du véhicule (m_fzg) et d'une résistance définie au déplacement, les paramètres de fonctionnement concernés étant tous saisis lors d'un changement de rapport exécuté manuellement et

**en ce que** chaque changement de rapport est conservé en mémoire dans un champ de données correspondant de la mémoire de données.

5. Procédé selon l'une des revendications 1 à 4, **caractérisé en ce que** les valeurs du rendement de couple (eta) des points de fonctionnement qui n'ont pas été traversés au cours du déplacement de test sont définies par une interpolation, une extrapolation ou une autre corrélation avec les valeurs existantes de rendement de couple (eta) et **en ce que** les valeurs résultantes (eta) sont conservées dans le champ de données concerné de la mémoire de données.

6. Procédé selon au moins l'une des revendications 1 à 5, **caractérisé en ce que** les valeurs des rendements de couple (eta) de points de fonctionnement traversés plusieurs fois pendant le déplacement de test sont utilisées pour en calculer la moyenne ou les évaluer statistiquement d'une autre manière et **en ce que** les valeurs résultantes (eta) sont conservées dans le champ de données concerné de la mémoire de données.

7. Procédé selon au moins l'une des revendications 1 à 6, **caractérisé en ce qu'**un signal acoustique et/ou optique est délivré si pendant le déplacement de test, tous les points de fonctionnement prédéterminés ont été traversés et les valeurs (eta) concernées ont été déterminées ou si les valeurs du rendement de couple (eta) des points de fonctionnement qui n'ont pas été traversés peuvent être déduites par interpolation, extrapolation ou autre corrélation entre les valeurs (eta) présentes.

8. Procédé selon la revendication 1, **caractérisé en ce que** l'activation du mode d'apprentissage de configuration s'effectue par l'intermédiaire d'un dispositif de contrôle d'accès pour limiter son utilisation à du personnel expérimenté.

EP 2 167 845 B1

m_ind [%]

n_mot
[1/min]

| | 600 | 1100 | 1500 | 1850 | 2000 | 2200 |
|---|---|---|---|---|---|---|
| 3 | 0,81 | 0,90 | 0,90 | 0,90 | 0,85 | 0,85 |
| 20 | 0,86 | 0,90 | 0,90 | 0,90 | 0,85 | 0,85 |
| 40 | 0,89 | 0,90 | 0,90 | 0,90 | 0,85 | 0,85 |
| 60 | 1,00 | 1,00 | 1,00 | 0,95 | 0,90 | 0,93 |
| 80 | 1,00 | 1,00 | 1,00 | 0,95 | 0,90 | 0,93 |
| 100 | 1,00 | 1,00 | 1,00 | 0,98 | 0,95 | C,93 |

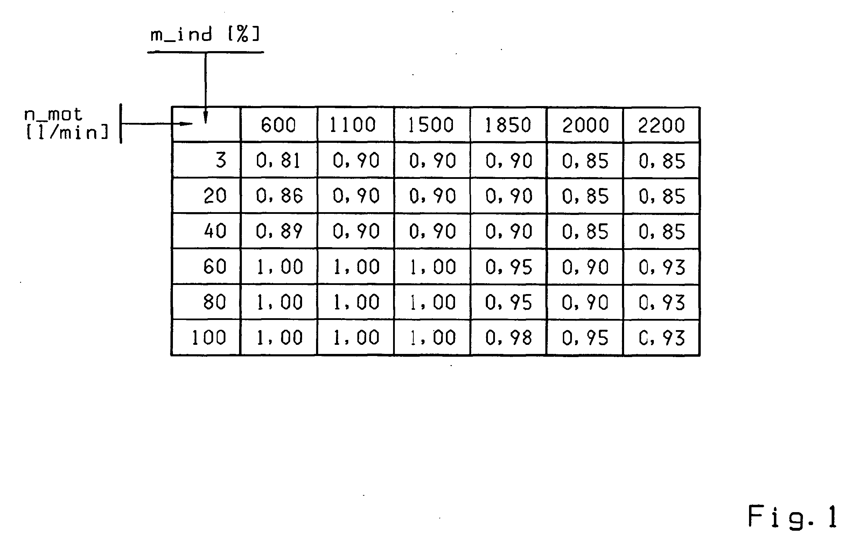

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69403419 T2
- EP 0645559 B1
- DE 19752623 C2
- DE 19916808 A1
- EP 0950839 A2
- DE 102005013697 A1
- DE 10134997 A1